# EUROPEAN PATENT SPECIFICATION

(11) **EP 1 228 672 B1**
(45) Date of publication and mention of the grant of the patent: **21.05.2003**
(21) Application number: 00964502.9
(22) Date of filing: 04.10.2000
(51) Int. Cl.: H05B 41/233, H05B 41/38, H05B 37/02, H05B 41/295

(54) **A POWER OSCILLATOR FOR DRIVING A DISCHARGE LAMP**
LEISTUNGSSTUFE MIT OSZILLATOR FÜR GASENTLADUNGSLAMPE
OSCILLATEUR DE PUISSANCE POUR COMMANDE DE LAMPE A DECHARGE

(30) Priority: 05.10.1999 GB 9923390
(43) Date of publication of application: 07.08.2002
(73) Proprietor: CENTRAL RESEARCH LABORATORIES LIMITED, Hayes, Middlesex, UB3 1HH (GB)
(72) Inventor: SEYMOUR, Colin Julian, South Harrow Middlesex HA2 9AZ (GB)
(74) Representative: Sharp, Alan Cooper
(86) International application number: GB0003807
(87) International publication number: WO01026427

(56) References cited:
- DE-A- 3 315 481
- US-A- 4 525 650
- US-A- 5 192 896

## Description

The present invention relates to a power oscillator for driving a discharge lamp. It relates particularly, though not exclusively to an oscillator for driving an inductively coupled discharge lamp such as an electrodeless lamp.

A known electrical power oscillator designed to drive inductively coupled lamps has previously been described in GB 2,322,019, and is essentially as shown in Figure 1. Although this circuit is very efficient, there are areas in which improvements are desired, mainly for cost and size reduction:
1. Wound components: there are 4, plus the lamp winding. These are all custom-made, except possibly L1, therefore introduce significant costs and PCB area requirements.
2. The circuit must be adjusted by C_{adj}. This component is relatively expensive compared to a fixed capacitor, invokes production costs, and is susceptible to drift, for example if contaminated by sealant. Eventually excessive ageing can occur shortening the lifetime of the circuit. It is desirable to eliminate the tuning capacitor or allow the use of a trimming resistor instead, which is less costly.

US 5,519,285 "Electrodeless Discharge Lamp" cites 25 patent references. These patents mainly refer to the electrodeless lamp itself and methods for coupling RF energy into the plasma via an externally wound coil or coils.

Circuits for electrodeless discharge lamps differ somewhat from those for electroded lamps. US 5,252,891 describes an "uninterruptible fluorescent lamp circuit available for emergency lighting" comprised of a circuit which generates a high-frequency, high-voltage power, and a current-limiting circuit which can provide enough high-voltage power to activate the lamp without the need to use any conventional starter and stabiliser. Electrodeless lamps must be driven by an external coil, and to obtain sufficient coupling of energy into the plasma, magnetic induction must be used since electric field coupling would require impractical voltage levels to couple equivalent energy into the plasma through the lamp shell. Because of a frequency dependency, the use of magnetic coupling is not practical below a few MHz. Practical coupling circuits are probably limited at the low end to approximately 5 MHz. Frequencies of 10, 13.6 and 27.1 MHz are common.

Higher frequencies (e.g. 2450 MHz) may be used but are not cost-effective for lamps of the order of 10 W power levels. US 5,852,339 "Affordable Electrodeless Lighting" describes a solid-state 2450MHz lamp (and see also US 4,070,630). For electroded lamps or low efficiency lamps, drive circuits may be operated at much lower frequencies corresponding to common practice in switching power supplies, i.e. up to about 1 MHz (for example US 4,712,170 describes an electroded neon tube power supply at 40kHz) or even at DC (for example US 5,675,220: "Power supply for vehicular neon light" describes a DC-DC converter utilising a Rover inverter circuit at 30 kHz to drive a neon bulb so as to avoid electromagnetic interference radiation from the bulb).

The principal general requirements for an inductive electrodeless lamp driver circuit are therefore, as described in GB 2,322,019:
1. Higher frequency operation- order of magnitude or more (compared with lamps having electrodes).
2. High frequency devices: e.g. fast switching, low distributed gate resistance power FETs.
3. Circuit must accommodate the reactive component of the gate impedance at the driving frequency (this is far more important at higher frequencies of operation).
4. A suitable phase shift response must be provided in the oscillator's feedback loop.
5. The circuit must generate sufficiently large electric field to strike the plasma discharge, then maintain a sufficiently high (but controlled) current in the induction coil to maintain an inductive plasma discharge.

According to the present invention there is provided a power oscillator as specified in the claims.

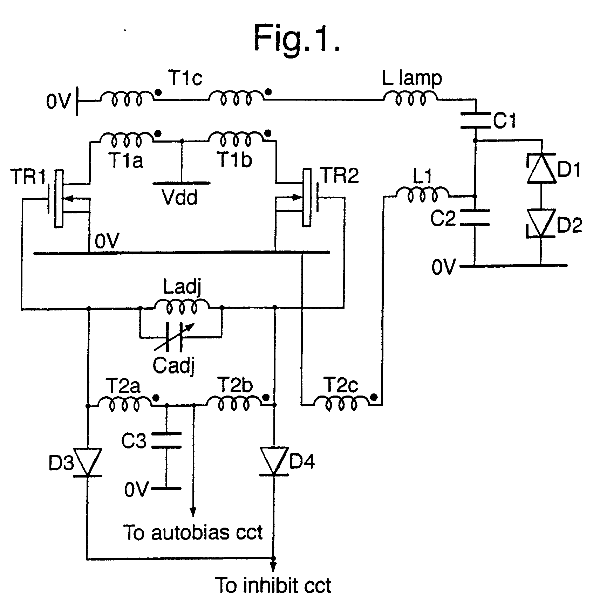

Embodiments of the invention will now be described, by way of example only, with reference to the accompanying schematic drawings, in which:-
Figure 1 shows a known circuit arrangement,
Figure 2 shows a circuit arrangement according to the present invention,
Figure 3 shows a coupling coil suitable for use with the circuit of Figure 2,
Figure 4 shows the arrangement of components around the feedback coupling loop,
Figure 5 shows another coupling arrangement, and
Figure 6 shows a daughterboard system for the arrangement of Figure 5.

The present invention is suitable for driving inductively coupled gas discharge lamps with air-cored coils, and due to the relatively low inductance and the frequency dependency of coupling between the magnetic field and plasma, the coils must be driven with frequencies of at least a few MHz. A frequency of 9-10 MHz has been found a good compromise between the coil-plasma response which improves with frequency, and the capability of present-day low cost transistors to supply power, which declines with frequency.

The circuit must handle the particular characteristics of inductively coupled discharge lamps, that is to say a resonant circuit must generate a high order of voltage multiplication (Q) to strike the gas discharge and must therefore be driven from a circuit which has a low source impedance throughout the full RF cycle, and not be damaged by the high voltages and currents present, and must also continue to supply drive power efficiently when the initial 'E' mode shifts to 'H' mode (power transferred by magnetic field to effective circulating current in the plasma) which results in an increase in effective loss resistance in the lamp resonant circuit.

In any oscillator, assuming that a feedback loop can be identified and broken at some point in order to measure energy flow as flowing from an output node on one side of the break to an input node on the other side of the break, the phase shift through the whole network must be zero, (or n times 360 degrees where n is an integer), and the gain magnitude must be 1. These are the Barkhausen criteria. In practical circuits, the unity gain results from the amplitude of oscillation growing until non-linear compression causes the gain magnitude to fall to unity.

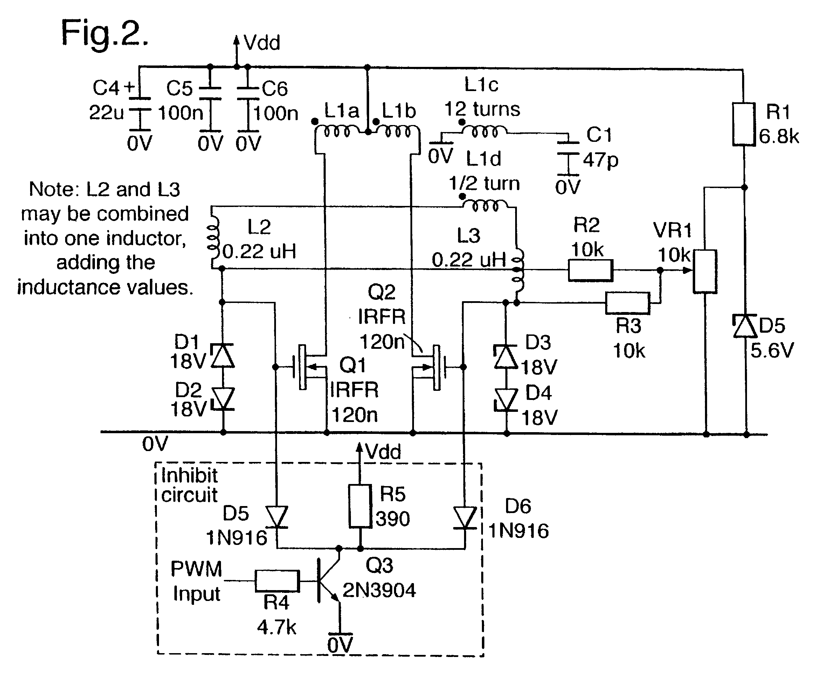

The circuit arrangement shown in Figure 2 is arranged with a feedback coupling loop to produce self-oscillation.

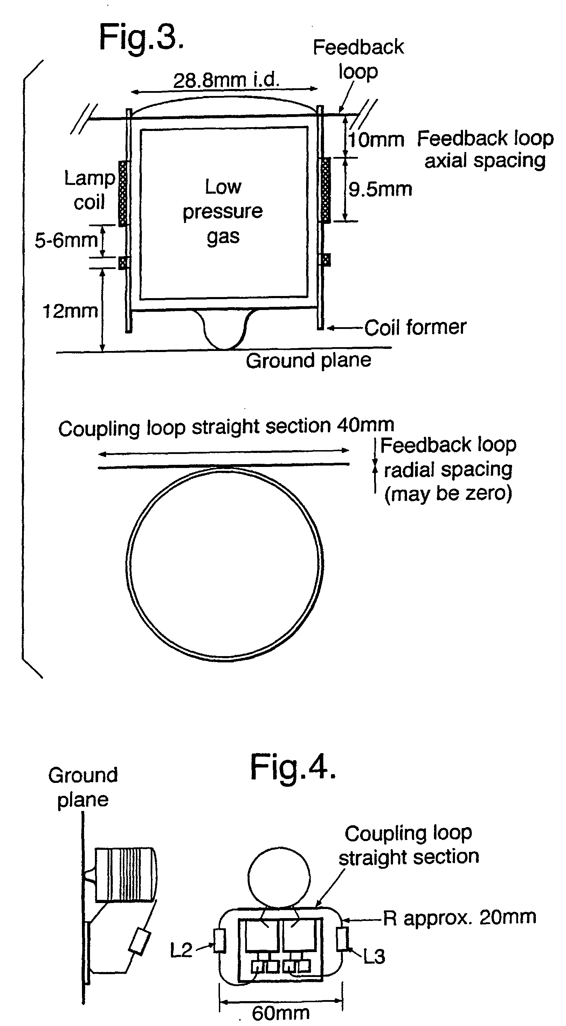

The diagram in Figure 3 shows the mechanical details for the combined FET output coupling coil, lamp coil, and feedback loop. In this case the feedback loop is an 'open loop' with lead-out wires spaced far apart.

Figure 4 shows the arrangement of components around the feedback coupling loop in the experimental prototype; the precise disposition of these components may be expected to have an effect on the circuit performance although the placement of the 40mm section nearest to the bulb is the most significant factor.

The connection of C1, 47pF, on L1c can be either on the side next to the drain coupling coil or the side next to the feedback coupling loop - very similar results were obtained in each case.

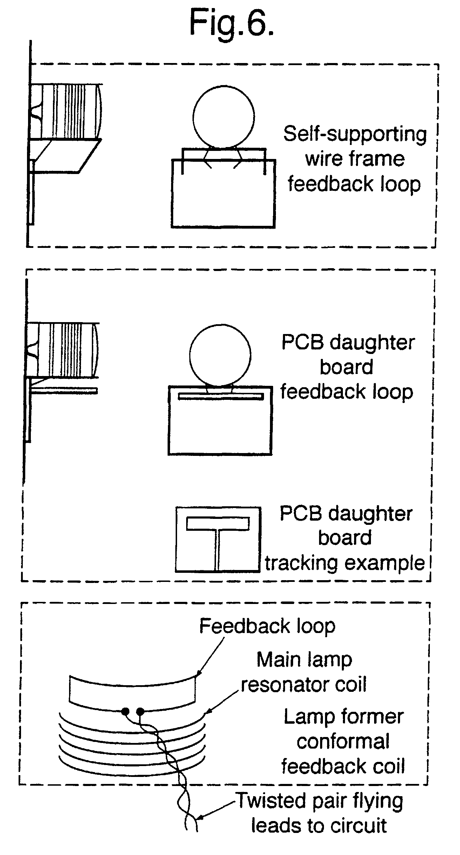

In practice, for a production lamp the feedback loop would be constructed using a self-supporting wire (1 or 1.5 mm diameter copper wire should be suitable) securely located mechanically by soldering the ends into the electronics PCB and by attaching to the coil former using a moulded insulating clip integral with the former or with an adhesive such as silicone RTV. Alternatively, (as shown in Figure 6), a daughterboard PCB may be mounted alongside the lamp containing a printed feedback loop. The shape of the feedback loop or the spacing in the axial direction may need to be modified if it is necessary to increase the spacing of the feedback loop from the lamp in the radial direction.

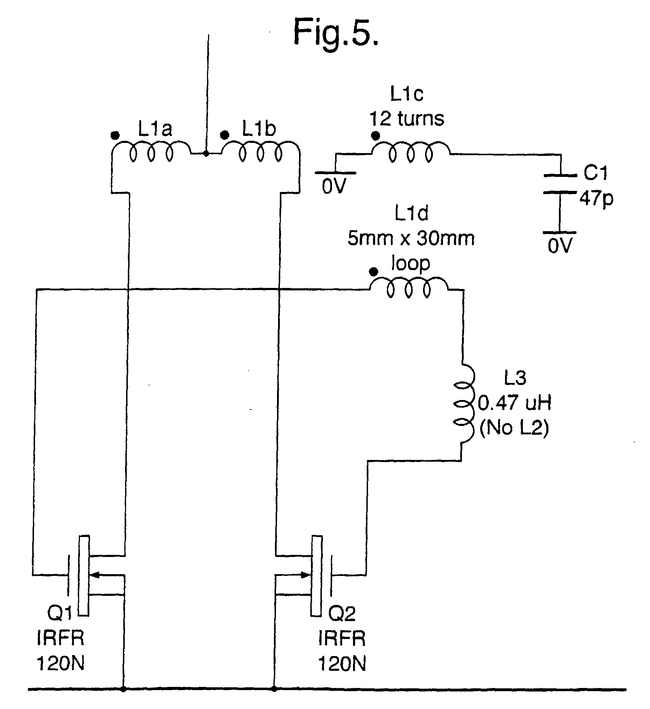

A performance similar to that with the 'open loop' was obtained using a rectangular wire loop 5 mm by 30 mm, with twisted pair connection to the gate circuit, placed at 5mm radial distance from the bulb and 9mm axial distance from the end of the 12 turn winding. This was used with a single 0.47 microhenry inductor, as shown in Figure 5. This shape is better suited to a daughterboard arrangement and has the advantage that the loop area better defines the magnetic field sensitive area, such that the circuit should be less sensitive to voltages induced in the leads between the feedback loop and the FET gates. This shape can also be used with a stiff wire frame, where the leadouts can be a twisted pair or a closely spaced parallel pair. A feedback loop of this form is also amenable to integration into the coil former itself as a loop conformal with the former surface. The connections to the FET gates will be reversed compared with the 'open loop' because the "bottom" of the loop is now on the other side of the lamp resonator winding.

L1a, L1b, and L1c (Figures 2 and 5) are wound as follows. L1c consists of 12 turns of 0.4 mm diameter PTFE covered wire, close wound on a 28.6 mm diameter gas discharge lamp envelope using a former (for experimental use only) of 100 micrometer thick acetate sheet. L1a and L1b are each one turn (i.e. two turns close wound centre tapped) of the same wire positioned with a gap of between 5 and 6 mm from the end of the main lamp coil. It is important to keep the lead lengths between FETs and lamp coil proper as short as possible; in the prototype, the leads to the FET drains were 10 to 15 mm long, and the centre tap was a length of about 5 mm twisted into a pigtail, soldered along its length, and soldered to two 100nF ceramic capacitors with their other leads connected directly to the ground plane. The Q of L1d is not critical.

L1d is a "half turn" feedback loop which is actually a length of wire that approaches the bulb envelope tangentially (a full loop around the bulb would couple too much energy out of the resonator circuit).

By placing the drain coupling coil and the feedback loop on opposite sides of the resonator coil, the direct coupling between the drain coupling coil and the feedback loop is minimised. This helps to ensure that oscillation occurs at the correct frequency that maximises the current in the resonator coil and hence maximises E and H mode coupling from the resonator coil into the lamp plasma.

A light output of 23000 lux was obtained close to the bulb for a 44% duty cycle at Vdd=12.8V, I(Vdd)ave=1.5A, and operating frequency of 9.48 MHz. This compares with the prior art oscillator/lamp circuit of GB 2,322,019, which gave 11960 lux at close range for a 65% duty cycle at V_{dd}=12.8V, I(V_{dd} )ave = 1.1A, and operating frequency of 9.3 MHz. The bias voltage at the slider of VR1 was adjusted to 3.23V which was just sufficient to start oscillation. Little change in light output or current consumption was observed with varying bias voltage.

The light output as a function of the position of the feedback loop is shown in Table 1 (note the sudden fall-off at the widest spacings):

**TABLE 1**

| Spacing ('open' loop) [mm] | Light output near bulb [lux] |
|---|---|
| 1 | 16300 |
| 2 | 16800 |
| 3 | 16800 |
| 4 | 16900 |
| 5 | 18400 |
| 6 | 20000 |
| 7 | 21200 |
| 8 | 22300 |
| 9 | 22400 |
| 10 | 23500 |
| 11 | 10800 |
| 12 | 130 |

Given a particular mechanical arrangement of a feedback loop, one of the spacings may be varied and light output measured similar to the above, then the preferred spacing may be selected and the mechanical design fixed.

The invention can provide the following potential advantages:
- Eliminating need for purpose built wound components or tuning capacitor.
- Interfaces to the same power supply voltage rail and pulse width modulation inputs as previous EDL circuits..
- Self-oscillating frequency is controlled by lamp tuned circuit and hence is more tolerant of drift in component values over time (compared with the sensitivity of the previous circuit to drift in the gate circuit tuning capacitor C_{adj} and related wound components L_{adj} and T₂).
- Lowered cost of manufacture.
- More easily modified for different types and sizes of lamp envelope.

## Claims

1. A power oscillator for driving a discharge lamp, including a feedback loop adjacent the lamp, the feedback loop being coupled inductively to the magnetic field generated by the lamp in use, the loop returning power at the resonant frequency to drive the oscillators switching devices, **characterised in that** the oscillator has an operating frequency between 3 and 30MHz.

2. A power oscillator as claimed in claim 1 in which the oscillator includes a drain coupling coil and a resonator coil, the feedback loop being located on the opposite side of the resonator coil to the drain coupling coil.

3. An electrodeless discharge lamp drive circuit including or consisting of a power oscillator as claimed in claim 1 or claim 2.

## Patentansprüche

1. Leistungsstufe mit Oszillator für eine Gasentladungslampe, umfassend eine neben der Lampe angeordnete Rückkopplungsschleife, wobei die Rückkopplungsschleife mit dem von der Lampe im Betrieb erzeugten Magnetfeld induktiv gekoppelt ist, wobei die Schleife zum Ansteuern der Oszillator-Schaltvorrichtungen Leistung mit der Resonanzfrequenz zurückführt, **dadurch gekennzeichnet, dass** der Oszillator eine Betriebsfrequenz zwischen 3 und 30 MHz besitzt.

2. Leistungsstufe mit Oszillator nach Anspruch 1, wobei der Oszillator eine Drain-Kopplungs-Spule und eine Resonatorspule umfasst, wobei die Rückkopplungsschleife auf der der Drain-Kopplungs-Spule gegenüberliegenden Seite der Resonatorspule angeordnet ist.

3. Elektrodenlose Gasentladungslampen-Treiberschaltung umfassend oder bestehend aus einer Leistungsstufe mit Oszillator nach Anspruch 1 oder Anspruch 2.

## Revendications

1. Oscillateur de puissance pour faire fonctionner une lampe à décharge, incluant une boucle de feed-back adjacente à la lampe, la boucle de feed-back étant couplée par induction au champ magnétique généré par la lampe en utilisation, la boucle retournant la puissance à la fréquence résonante pour faire fonctionner les oscillateurs commutant les dispositifs, **caractérisé en ce que** l'oscillateur a une fréquence de fonctionnement entre 3 et 30 MHz.

2. Oscillateur de puissance comme revendiqué dans la revendication 1, dans lequel l'oscillateur inclut un drain couplant la bobine et la bobine de résonateur, la boucle de feed-back étant située sur le côté opposé de la bobine de résonateur à la bobine de couplage de drain.

3. Circuit d'attaque de lampe à décharge sans électrode incluant ou se composant d'un oscillateur de puissance comme revendiqué dans la revendication 1 ou la revendication 2.
